# EUROPÄISCHE PATENTSCHRIFT

(11) **EP 3 008 355 B1**
(45) Veröffentlichungstag und Bekanntmachung des Hinweises auf die Patenterteilung: **17.01.2018**
(21) Anmeldenummer: 14752595.0
(22) Anmeldetag: 08.08.2014
(51) Int. Cl.: F16D 3/18, F16H 1/28, F03D 15/00, F16H 57/04

(54) **PLANETENGETRIEBE FÜR EINE WINDKRAFTANLAGE UND VERFAHREN**
PLANETARY GEAR TRAIN FOR A WIND POWER PLANT AND METHOD
ENGRENAGE PLANÉTAIRE DESTINÉ À UNE ÉOLIENNE ET PROCÉDÉ

(30) Priorität: 09.09.2013 DE 102013217950
(43) Veröffentlichungstag der Anmeldung: 20.04.2016
(73) Patentinhaber: Flender GmbH, 46395 Bocholt (DE)
(72) Erfinder: DEITMERS, Michael, 48163 Münster (DE); MÖLLENDORF, Ralf, 45481 Mülheim (DE)
(74) Vertreter: Maier, Daniel Oliver
(86) Internationale Anmeldenummer: PCT/EP2014/067108
(87) Internationale Veröffentlichungsnummer: WO 2015/032591

(56) Entgegenhaltungen:
- EP-A1- 2 594 789
- EP-A2- 2 280 193
- DE-A1- 10 302 192
- DE-A1-102009 031 320
- DE-A1-102010 043 816
- DE-U1- 8 535 076
- US-A- 2 842 945
- US-A- 3 174 352

## Beschreibung

Die Erfindung betrifft ein Planetengetriebe für eine Windkraftanlage.

EP 2594789 A1 (Winergy AG) 22.05.2013 beschreibt eine Schmierstoffversorgung einer Zahnkupplung eines Windturbinengetriebes. Dabei sprüht eine Schmierstoffzuführungsdüse Schmierstoff an eine konische Durchtrittsöffnung eines Schmierstoffzuführungsrings. Durch eine Aufweitung des Schmierstoffzuführungsrings in Richtung der Zahnkupplung erfolgt eine Weiterleitung von eingespritztem Schmierstoff in Richtung der Zahnkupplung. EP 2594789 A1 offenbart ein Planetengetriebe für eine Windkraftanlage, umfassend- eine in einem Getriebegehäuse umlaufende antriebsseitige Planetenstufe, eine der Planetenstufe nachgeschaltete, abtriebsseitige Stirnradstufe, eine mit einem Sonnenrad der Planetenstufe drehfest verbundene Sonnenwelle und- eine Hohlwelle, die von einem Stirnrad der Stirnradstufe koaxial umgeben und mit diesem drehfest verbunden ist, wobeidie Sonnenwelle und die Hohlwelle durch eine Zahnkupplung, bei der eine Außenverzahnung der Sonnenwelle mit einer Innenverzahnung der Hohlwelle in Eingriff steht, drehfest miteinander verbunden sind und im Bereich einer Axialkontaktfläche aneinander anliegen, und das Getriebe Ölführungskanäle aufweist, welche zur Druckschmierung der Zahnkupplung eine Verbindung zwischen einem mit dem Getriebegehäuse verbundenen Ölzulauf einerseits und der Zahnkupplung andererseits herstellen. Windturbinengetriebe können Zahnwellenverbindungen und Drucklagerflächen umfassen, die innerhalb zweier rotierender Bauteile liegen. Die ausreichende Versorgung derartiger Metall-Metall-Kontakte mit Schmiermittel ist wichtig, um den Verschleiß zu vermindern. Die nur indirekte Zugänglichkeit der Schmierstellen und die durch die Rotation der Bauteile verursachte Fliehkraftwirkung macht eine ausreichende Schmierstoffversorgung mittels einer Ölspritz- bzw. Ölsprüheinrichtung schwierig. In der Praxis kommt es bei einer Freistrahlanspritzung der Schmierstellen zu erheblichen Schmierstoffverlusten, sodass nur ein kleiner Teil des Schmierstoffs die Schmierstellen erreicht. Die Versorgung der Schmierstellen mit Schmierstoff ist somit erheblich beeinträchtigt.

Der vorliegenden Erfindung liegt somit die Aufgabe zugrunde, eine verbesserte Schmierstoffversorgung in einem Windturbinengetriebe zu gewährleisten.

Diese Aufgabe wird erfindungsgemäß durch ein Planetengetriebe für eine Windkraftanlage mit den in Anspruch 1 angegebenen Merkmalen gelöst. Das Planetengetriebe für eine Windkraftanlage umfasst eine in einem Getriebegehäuse umlaufende antriebsseitige Planetenstufe, eine der Planetenstufe nachgeschaltete, abtriebsseitige Stirnradstufe, eine mit einem Sonnenrad der Planetenstufe drehfest verbundene Sonnenwelle und eine Hohlwelle, die von einem Stirnrad der Stirnradstufe koaxial umgeben und mit diesem drehfest verbunden ist. Die Sonnenwelle und die Hohlwelle sind durch eine Zahnkupplung, bei der eine Außenverzahnung der Sonnenwelle mit einer Innenverzahnung der Hohlwelle in Eingriff steht, drehfest miteinander verbunden. Die Sonnenwelle und die Hohlwelle liegen im Bereich einer Axialkontaktfläche aneinander an. Das Getriebe weist Ölführungskanäle auf, welche zur Druckschmierung der Zahnkupplung und der Axialkontaktfläche eine Verbindung zwischen einem mit dem Getriebegehäuse verbundenen Ölzulauf einerseits und der Zahnkupplung und der Axialkontaktfläche andererseits herstellen. Das Windgetriebe kann auch mehr als zwei Planetenstufen umfassen. Es ist auch möglich, dass das Windgetriebe mehrere Axialkontaktflächen aufweist, wobei Öl zu mindestens einer Axialkontaktfläche erfindungsgemäß über Ölführungskanäle zuführbar ist.

In der Beschreibung werden die Begriffe "Schmierstoff" und "Öl" synonym verwendet. Die Verwendung des Begriffs "Öl" umfasst also alle geeigneten Schmierstoffe.

Die Erfindung beruht auf der Erkenntnis, dass - im Gegensatz zu einer Ölspritz- bzw. Ölsprühschmierung - mittels einer Druckschmierung über Ölführungskanäle Schmierstoff auf zuverlässige Art und Weise auch zu nur schwer zugänglichen, z.B. weil nur indirekt zugänglichen, Schmierstellen an schnelldrehenden Wellen gebracht werden kann. Aufgrund der typischen Drehzahlen der miteinander in Eingriff stehenden Wellen Sonnenwelle und Hohlwelle im Bereich von 450 U/min ergibt sich nämlich bei einer Freistrahlanspritzung die Gefahr, dass das Öl vor Erreichen der Schmierstelle durch die Fliehkraft von den Bauteilen abgeschleudert wird. Mit einer Druckschmierung, vorzugsweise mit einem Öldruck von mindestens ca. 1 bis 1,5 bar über Atmosphärendruck, kann Öl trotz der wirkenden Fliehkräfte zuverlässig zu den zu schmierenden Stellen geleitet werden. Übliche Öldrucke für die Druckschmierung liegen bei ca. 1 bis 2 bar, insbesondere bei 1,5 bis 2 bar.

Die Erfindung löst das Problem der erheblichen Schmierstoffverluste, welche bei der bisher realisierten Ölspritz- bzw. Ölsprühschmierung der Zahnkupplung durch Freistrahlzuführung auftritt. Statt der Ölspritz- bzw. Ölsprühschmierung wird erfindungsgemäß eine Druckölversorgung der Schmierstellen über eine Drehdurchführung für den Schmierstoff vorgesehen. Dadurch wird eine erhebliche Reduzierung der bei Freistrahlschmierung auftretenden Verluste erreicht.

Ein weiterer Vorteil der neuen Art der Zuführung von Schmierstoff zu den Schmierstellen liegt darin, dass eine Durchströmungsrichtung erzwungen wird. Dadurch wird erreicht, dass Verschleißpartikel aus dem Kontaktbereich der Bauteile herausgetragen werden und nicht mehr verschleißfördernd wirken können.

In Getrieben können zur Übertragung von Axialkräften von einem ersten Bauteil auf ein zweites Bauteil axiale Kontaktflächen vorgesehen sein. Ein Beispiel für ein derartiges Bauteilpaar ist eine Sonnenradwelle einer Planetenstufe und eine Hohlwelle einer Stirnradstufe bei einem Getriebe für eine Windkraftanlage. Dabei liegt eine ringförmige Kontaktfläche der Sonnenradwelle an einer korrespondierenden Kontaktfläche der Hohlwelle an. Ein technisches Problem besteht im Auftreten von Verschleiß an den axialen Kontaktflächen der aneinander liegenden Bauteile. Durch den Verschleiß besteht die Gefahr von Verzahnungs- oder Lagerschäden entweder direkt durch eine verschleißbedingte Verlagerung der Bauteile zueinander oder indirekt durch eine Emission von Verschleißpartikeln. Dieser Verschleiß wird durch eine zuverlässige Schmierung der Kontaktfläche, wie sie mit der vorliegenden Erfindung realisierbar ist, gemindert.

Vorteilhafte Ausgestaltungen und Weiterbildungen der Erfindung sind in den abhängigen Ansprüchen angegeben.

Gemäß einer vorteilhaften Weiterbildung der Erfindung umfasst das Planetengetriebe einen ersten axialen Ölführungskanal, der durch einen sich zwischen der Hohlwelle und der Sonnenwelle erstreckenden ringförmigen Hohlraum gebildet wird, und/oder einen zweiten axialen Ölführungskanal, der axial durch die Hohlwelle hindurchgeführt ist, sowie einen radialen Ölführungskanal, der radial durch einen an der Hohlwelle angeformten Ring verläuft und an dem einen Ende mit dem Ölzulauf und an dem anderen Ende mit dem ersten und/oder dem zweiten axialen Ölführungskanal in Verbindung steht.

Gemäß einer vorteilhaften Weiterbildung der Erfindung umfasst das Planetengetriebe eine in einem Getriebegehäuse umlaufende Planetenstufe, eine der Planetenstufe nachgeschaltete Stirnradstufe, eine mit einem Sonnenrad der Planetenstufe drehfest verbundene Sonnenwelle und eine Hohlwelle. Die Hohlwelle ist von einem Stirnrad der Stirnradstufe koaxial umgeben und mit diesem drehfest verbunden. Die Sonnenwelle und die Hohlwelle sind durch eine Zahnkupplung drehfest miteinander verbunden. Die Zahnkupplung ist durch eine Außenverzahnung der Sonnenwelle und eine Innenverzahnung der Hohlwelle gebildet, die miteinander in Eingriff stehen. Die Zahnkupplung ist in einem axialen Abschnitt des Getriebes angeordnet, in dem die Sonnenwelle von der Hohlwelle umgeben ist. Das Getriebe umfasst weiter einen zwischen der Hohlwelle und der Sonnenwelle verlaufenden, zu der Zahnkupplung führenden ersten axialen Ölführungskanal und eine Drehübertragungsvorrichtung, welche zur Übertragung von Öl von einem mit dem Getriebegehäuse verbundenen Ölzulauf zu dem ersten Ölführungskanal geeignet ist.

Gemäß einer vorteilhaften Weiterbildung der Erfindung umfasst das Getriebe eine Drehübertragungsvorrichtung, welche zur Übertragung von Öl von dem Ölzulauf zu den Ölführungskanälen geeignet ist.

Gemäß einer vorteilhaften Weiterbildung der Erfindung umfasst die Drehübertragungsvorrichtung eine in einen an der Hohlwelle angeformten Ring eingeschnittene Ringnut, in welche der Ölzulauf mündet und welche mit den Ölführungskanälen in Verbindung steht.

Alternativ kann der die Ringnut aufweisende Ring auch als ein separater Einsatzring bzw. Schmierstoffzuführungsring ausgebildet sein, anstatt einstückig mit der Hohlwelle ausgeformt zu sein. Dabei kann der Einsatzring gegenüber der Hohlwelle stillstehen oder mit einer anderen Drehfrequenz rotieren. Es ist auch möglich, dass der Einsatzring mit der Hohlwelle verbunden ist. Weiter kann der Einsatzring einen Ölführungskanal aufweisen, der an einem ersten Ende mit einem durch eine Wand des Getriebegehäuses geführten Ölzulauf in Verbindung steht, der mit einer Ölförderpumpe verbunden ist. An einem zweiten Ende steht der Ölführungskanal mit einem axialen Ölführungskanal in Verbindung, ggf. wiederum über eine Ringnut.

Gemäß einer vorteilhaften Weiterbildung der Erfindung umfasst die Drehübertragungsvorrichtung für Schmierstoff eine Ringnut, welche in einen an der Hohlwelle angeformten Ring eingeschnitten ist. In diese Ringnut mündet der vorzugsweise durch das Getriebegehäuse geführte Ölzulauf. Die Drehübertragungsvorrichtung für Schmierstoff umfasst außerdem mindestens einen Ölführungskanal, welcher sich radial durch den Ring erstreckt und so eine Verbindung zwischen der Ringnut und mindestens einem der axialen Ölführungskanäle bildet.

Gemäß einer vorteilhaften Weiterbildung der Erfindung ist die Zahnkupplung in einem axialen Abschnitt des Getriebes angeordnet, in dem die Hohlwelle die Sonnenwelle umgibt.

Gemäß einer vorteilhaften Weiterbildung der Erfindung ist das antriebsseitige Ende des ersten axialen Ölführungskanals durch eine zwischen der Sonnenwelle und der Hohlwelle angeordnete ringförmige Abdichtung abgedichtet. Die Abdichtung kann als eine berührende Abdichtung, z.B. ein O-Ring, oder eine berührungsfreie Abdichtung der beiden Bauteile, z.B. eine Labyrinthdichtung, ausgebildet sein. Der O-Ring kann dabei in eine ringförmige Nut der Hohlwelle oder der Sonnenwelle eingesetzt sein. Die Abdichtung der beiden Bauteile Sonnenwelle und Hohlwelle zueinander bewirkt, dass Schmierstoff nicht mehr in Richtung von der Zahnkupplung weg verloren gehen kann, d.h. aus dem ersten axialen Ölführungskanal entweichen kann. Somit wird die Durchströmung durch die Zahnkupplung und ggf. weiter die axiale Drucklagerfläche noch stärker und verlustärmer.

Gemäß einer vorteilhaften Weiterbildung der Erfindung schließt sich an das von dem ersten axialen Ölführungskanal abgewandte Ende der Zahnkupplung ein sich zwischen der Sonnenwelle und der Hohlwelle erstreckender ringförmiger Hohlraum an. Der Hohlraum steht auf einer Seite mit der Axialkontaktfläche der Sonnenwelle und der Hohlwelle in Verbindung, und auf der anderen Seite durch die Zahnkupplung mit dem ersten axialen Ölführungskanal. Das über den ersten axialen Ölführungskanal der Zahnkupplung zugeleitete Öl kann somit nach dem schmierenden Durchfließen der Zahnkupplung über den Hohlraum zu der Axialkontaktfläche der Sonnenwelle und der Hohlwelle gelangen und dort für eine verschleißmindernde Schmierung sorgen.

Gemäß einer vorteilhaften Weiterbildung der Erfindung weist die Sonnenwelle einen ringförmigen Wulst auf, welcher mit dem Ring der Hohlwelle zusammenwirkt, um ein Ende des ersten axialen Ölführungskanals zu bilden. Dabei liegt der ringförmige Wulst nicht an dem Ring der Hohlwelle an, sondern es verbleibt ein Spalt, welcher vorzugsweise durch eine - berührende oder berührungsfreie - Abdichtung abgedichtet sein kann. Da der ringförmige Wulst den Querschnitt des ersten axialen Ölführungskanals bereits weitgehend verengt, kann die vollständig abschließende Abdichtung kleiner ausgebildet sein. Die Schließung des ersten axialen Ölführungskanals an dessen von der Zahnkupplung abgewandten Ende bewirkt, dass Schmierstoff nicht mehr in Richtung von der Zahnkupplung weg verloren gehen kann, d.h. aus dem ersten axialen Ölführungskanal entweichen kann. Somit wird die Durchströmung durch die Zahnkupplung und ggf. weiter die axiale Drucklagerfläche noch stärker und verlustärmer.

Gemäß einer vorteilhaften Weiterbildung der Erfindung steht der Ölzulauf mit einer Ölförderpumpe in Verbindung. Dadurch kann eine Druckschmierung der Schmierstellen unter einem vorgegebenen Druck eingehalten werden.

Die Aufgabe wird auch gelöst durch ein Verfahren zum Schmieren eines Planetengetriebes für eine Windkraftanlage, wobei das Planetengetriebe eine in einem Getriebegehäuse umlaufende antriebsseitige Planetenstufe, eine der Planetenstufe nachgeschaltete, abtriebsseitige Stirnradstufe, eine mit einem Sonnenrad der Planetenstufe drehfest verbundene Sonnenwelle und eine Hohlwelle, die von einem Stirnrad der Stirnradstufe koaxial umgeben und mit diesem drehfest verbunden ist, wobei die Sonnenwelle und die Hohlwelle durch eine Zahnkupplung, bei der eine Außenverzahnung der Sonnenwelle mit einer Innenverzahnung der Hohlwelle in Eingriff steht, drehfest miteinander verbunden sind und im Bereich einer Axialkontaktfläche aneinander anliegen, umfasst, wobei Öl mit Druck durch Ölführungskanäle, welche eine Verbindung zwischen einem mit dem Getriebegehäuse verbundenen Ölzulauf einerseits und der Zahnkupplung und der Axialkontaktfläche andererseits herstellen, zu der Zahnkupplung und der Axialkontaktfläche geleitet wird.

Es ist bevorzugt, wenn das Öl mit einem Druck von mindestens ca. 1 bis 1,5 bar über Atmosphärendruck zu der Zahnkupplung und der Axialkontaktfläche transportiert wird. Übliche Öldrucke für die Druckschmierung liegen bei ca. 1 bis 2 bar, insbesondere bei 1,5 bis 2 bar. Durch den relativ hohen Öldruck eventuell auftretende Leckageverluste, insbesondere an Öl-Übergabestellen zwischen rotierenden und nicht rotierenden Bauteilen, werden in Kauf genommen bzw. durch einen entsprechend höheren Ölvolumenstrom ausgeglichen.

Es ist vorteilhaft, wenn das durch die Ölführungskanäle geleitete Öl vor und/oder nach Erreichen der Axialkontaktfläche die Zahnkupplung erreicht und schmiert.

Die vorliegende Erfindung wird nachfolgend an einem Ausführungsbeispiel anhand der Zeichnungen näher erläutert. Es zeigen:
- FIG 1: eine Querschnittsdarstellung eines dreistufigen Getriebes für eine Windkraftanlage;
- FIG 2: eine erstes Ausführungsbeispiel in vergrößerter Darstellung der FIG 1; und
- FIG 3: eine weiteres Ausführungsbeispiel in vergrößerter Darstellung der FIG 1.

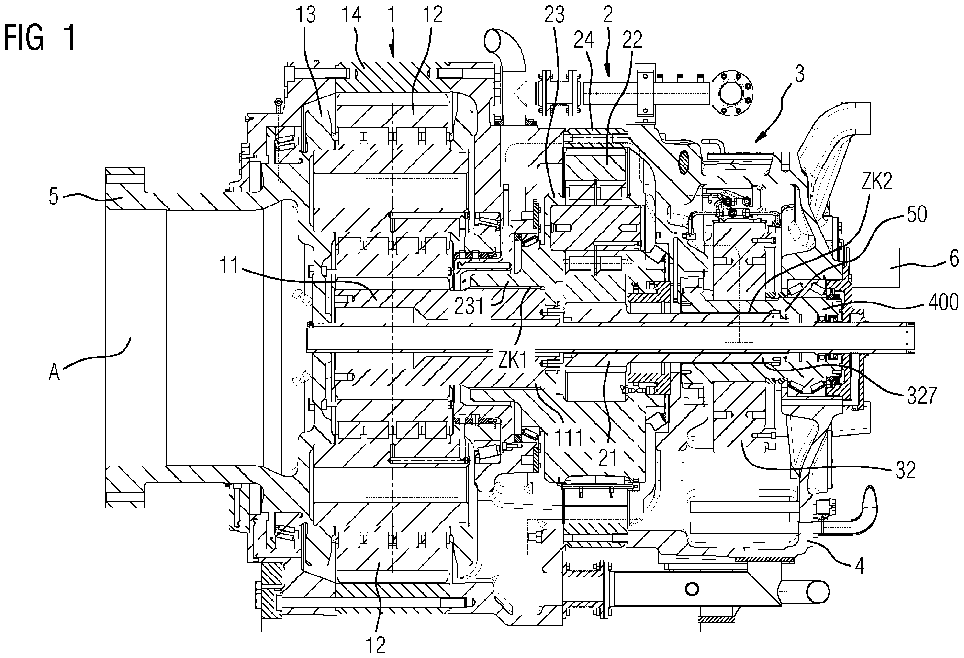

FIG 1 stellt ein Getriebe dar, das eine antriebsseitige erste Planetenstufe 1, eine der ersten Planetenstufe 1 nachgeschaltete abtriebsseitige zweite Planetenstufe 2 sowie eine abtriebsseitige Stirnradstufe 3 umfasst, die von einem Getriebegehäuse 4 umgeben sind. Im Getriebegehäuse 4 sind eine mit einer Rotornabe verbindbare Antriebswelle 5 und eine mit einem Generator verbindbare Abtriebswelle 6 gelagert. Die Antriebswelle 5 ist mit einem Planetenträger 13 der antriebsseitigen Planetenstufe 1 verbunden, während die Abtriebswelle 6 mit einem nicht dargestellten Stirnritzel der abtriebsseitigen Stirnradstufe 3 verbunden ist.

Die beiden Planetenstufen 1, 2 umfassen jeweils ein Hohlrad 14, 24, mehrere in einem Planetenträger 13, 23 gelagerte Planetenräder 12, 22 und ein Sonnenrad 11, 21. Die Antriebswelle 5 ist dabei einstückig an den Planetenträger 13 der antriebsseitigen Planetenstufe 1 angeformt. Eine mit dem Sonnenrad 11 der antriebsseitigen Planetenstufe 1 drehfest verbundene Sonnenwelle 111 ist über eine Kurzverzahnungskupplung ZK1 mit dem Planetenträger 23 der zweiten Planetenstufe 2 verbunden. An den Planetenträger 23 der zweiten Planetenstufe 2 ist eine Hohlwelle 231 einstückig angeformt, die einen Endabschnitt der Sonnenwelle 111 der antriebsseitigen Planetenstufe 1 konzentrisch umgibt. Die Kurzverzahnungskupplung ZK1 zwischen den beiden Planetenstufen 1, 2 ist dabei durch eine Außenverzahnung an der Sonnenwelle 111 der antriebsseitigen Planetenstufe 1 und durch eine Innenverzahnung an der Hohlwelle 231 am Planetenträger 23 der zweiten Planetenstufe 2 gebildet.

Die Stirnradstufe 3 umfasst neben dem Stirnritzel ein mit diesem kämmendes Stirnrad 32 und eine Hohlwelle 400, die vom Stirnrad 32 koaxial zu der Getriebeachse A umgeben und mit diesem drehfest verbunden ist. Eine mit dem Sonnenrad 21 der zweiten Planetenstufe 2 drehfest verbundene Sonnenwelle 327 ist über eine Kurzverzahnungskupplung ZK2 mit der Hohlwelle 400 der Stirnradstufe 3 verbunden, die einen Endabschnitt der Sonnenwelle 327 koaxial zu der Getriebeachse A umgibt. Die Kurzverzahnungskupplung ZK2 zwischen der zweiten Planetenstufe 2 und der Stirnradstufe 3 ist dabei durch eine Außenverzahnung an der Sonnenwelle 327 der zweiten Planetenstufe 2 und durch eine Innenverzahnung an der Hohlwelle 400 der Stirnradstufe 3 gebildet. Um den Verschleiß der Zahnkupplung ZK2 gering zu halten, sollte diese geschmiert werden.

Auf die Sonnenwelle 327 wirkende Axialkräfte, u.a. hervorgerufen durch Schrägverzahnungen des Sonnenrads 21 und der mit dem Sonnenrad 21 kämmenden Planetenräder 22 der zweiten Planetenstufe 2, drücken die Sonnenwelle 327 gegen die Hohlwelle 400 der Stirnradstufe 3. Dabei berühren sich die Sonnenwelle 327 und die Hohlwelle 400 an korrespondierenden axialen Kontaktflächen 50, den sog. Axialkontaktflächen. Um den Verschleiß der Axialkontaktflächen 50 gering zu halten, sollten diese geschmiert werden.

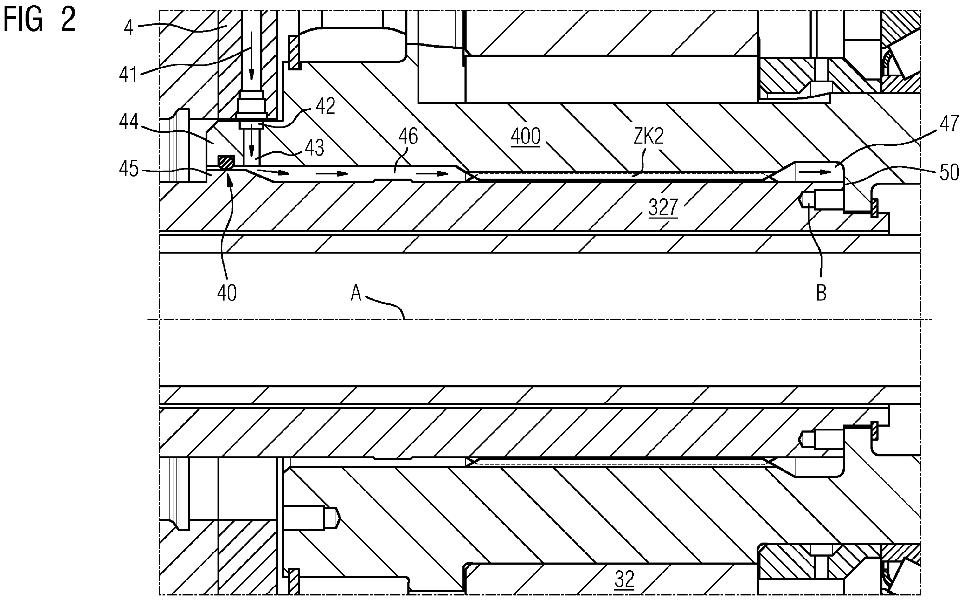

FIG 2 zeigt ein vergrößertes Detail aus FIG 1, und zwar die Sonnenwelle 327 der zweiten Planetenstufe und die Hohlwelle 400 der Stirnradstufe im Bereich der diese beiden Bauteile verbindenden Zahnkupplung ZK2 und der axialen Kontaktfläche 50. Die Bohrungen B in der Stirnfläche der Sonnenwelle 327 dienen dem Bauteilhandling während der Fertigung.

Ein Ölzulauf 41 ist mit dem Getriebegehäuse 4 verbunden. Der Ölzulauf 41 steht mit einer Ölförderpumpe in Verbindung, so dass Öl unter einem vorgegebenen Druck durch den Ölzulauf 41 transportiert werden kann. Der Ölzulauf 41 mündet in einer Ringnut 42, die an dem Außenumfang eines Ring 44 geformt ist, welcher an dem rotorseitigen Ende der Hohlwelle 400 ausgebildet ist. Von der Ringnut 42 gehen in radialer Richtung ein oder mehrere radiale Ölführungskanäle 43 ab, durch welche das Öl in Richtung zu der Sonnenwelle 327 geleitet werden kann.

Das zu der Sonnenwelle 327 hin gelegene Ende der radialen Ölführungskanäle 43 mündet in einem ersten axialen Ölführungskanal 46. Das rotorseitige Ende des Kanals 46 ist durch einen ringförmigen Wulst 45 am Außenumfang der Sonnenwelle 327 blockiert, der sich bis zu dem Innenumfang des Rings 44 der Hohlwelle 400 erstreckt. Zur vollständigen fluiddichten Abdichtung des rotorseitigen Endes des ersten axialen Ölführungskanals 46 ist zwischen dem Wulst 45 der Sonnenwelle 327 und dem Ring 44 der Hohlwelle 400 ein Dichtungsring 40 in einer Ringnut angeordnet.

Zu der zweiten Zahnkupplung ZK2 hin verläuft der erste axiale Ölführungskanal 46 in Form eines Hohlzylinders zwischen der Sonnenwelle 327 und der Hohlwelle 400. Der erste axiale Ölführungskanal 46 wird also in einem axialen Abschnitt des Getriebes, in dem die Hohlwelle 400 die Sonnenwelle 327 umgibt, automatisch gebildet. An das abtriebsseitige Ende des ersten axialen Ölführungskanals 46 schließt sich die Zahnkupplung ZK2 an. An das abtriebsseitige Ende der Zahnkupplung ZK2 schließt sich ein ringförmiger Hohlraum 47, der - wie der erste axiale Ölführungskanal 46 - in einem axialen Abschnitt des Getriebes, in dem die Hohlwelle 400 die Sonnenwelle 327 umgibt, automatisch gebildet wird. An dem abtriebsseitigen Ende des Hohlraums 47 befindet sich die Axialkontaktfläche 50, entlang der die Sonnenwelle 327 und die Hohlwelle 400 aneinander liegen.

Im Betrieb des Planetengetriebes rotieren die mittels der Zahnkupplung ZK2 drehfest miteinander gekoppelten Bauteile Sonnenwelle 327 und Hohlwelle 400 miteinander um die Getriebeachse A, z.B. mit einer Drehzahl im Bereich von 470 U/min. Aus dem Ölzulauf 41, welcher mit dem nicht-rotierenden Getriebegehäuse 4 verbunden ist, wird Öl in die Ringnut 42 der rotierenden Hohlwelle 400 gepumpt. In FIG 2 ist die sich einstellende Strömungsrichtung des Öls durch Pfeile angegeben. Aufgrund des Öldrucks kann das Öl entgegen der Zentrifugalkraft, die durch die Rotation der Hohlwelle 400 auf das Öl wirkt, durch den radialen Ölführungskanal 43 zum ersten axialen Ölführungskanal 46 transportiert werden. Durch den flüssigkeitsdichten Abschluss des antriebsseitigen Endes des ersten axialen Ölführungskanals 46 ist das Öl gezwungen, ausschließlich in der gewünschten Strömungsrichtung zu fließen. Somit durchströmt das Öl nacheinander die Zahnkupplung ZK2, den Hohlraum 47 und die Axialkontaktfläche 50. Nach dem Austritt aus der Axialkontaktfläche 50 fließt das Öl in einen Ölsumpf des Getriebes.

Auf diese Weise wird eine zuverlässige und kontinuierliche Durchströmung mit Schmierstoff, und zwar in Form einer Druckschmierung, der Zahnkupplung ZK2 zwischen der Sonnenwelle 327 der zweiten Planetenstufe 2 und der von dem Stirnrad 32 der Stirnradstufe 3 koaxial umgebenen Hohlwelle 400 der Stirnradstufe 3 sowie der Axialkontaktfläche 50 erzielt. Durch die erzwungene Durchströmung in einer vorgegebenen Richtung wird erreicht, dass Verschleißpartikel aus dem Kontaktbereich der Bauteile herausgetragen werden und nicht mehr verschleißfördernd wirken können.

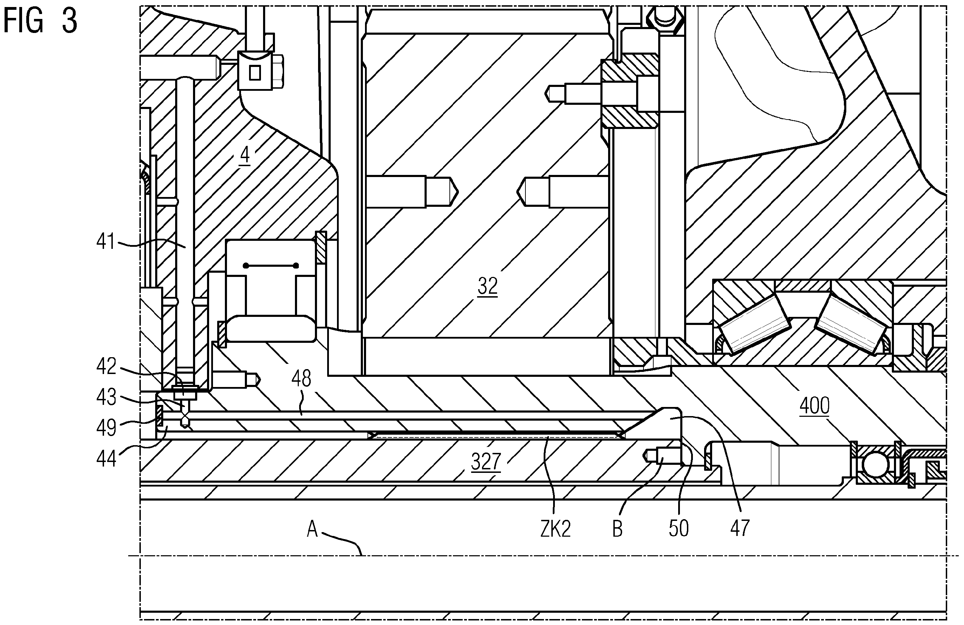

FIG 3 zeigt dieselben Bauteile wie FIG 2, aber gemäß einer alternativen Ausführung der Erfindung. Es wird daher auf die o.a. Erläuterungen zu der FIG 2 verwiesen, wobei aber folgende Unterschiede vorliegen: Anstatt des ersten axialen Ölführungskanals 46 weist bei dieser Ausführung die Hohlwelle 400 einen zweiten axialen Ölführungskanal 48 auf, der parallel zu der Getriebeachse A die Hohlwelle durchdringt. Der den Ring 44 radial durchlaufende radiale Ölkanal 43 ist als Sackloch ausgebildet, steht aber mit dem zweiten axialen Ölführungskanal 48 in Verbindung. An dem einen Ende verläuft der zweite axiale Ölführungskanal 48 bis zu einer Stirnseite des Rings 44, an dem anderen Ende mündet er in den Hohlraum 47. Da die an der Stirnseite des Rings 44 angeordnete Mündung nach der Herstellung des Kanals 48 wieder verschlossen wurde, z.B. durch einen Verschlussstopfen 49, kann über den radialen Ölkanal 43 zugeführtes Öl den zweiten axialen Ölführungskanal 48 nur in einer Richtung durchfließen. Dieses Öl gelangt somit zunächst in den Hohlraum 47. Von dort kann ein Teil des Öls zu der Axialkontaktfläche 50 fließen, der restliche Teil kann aus dem Hohlraum 47 zu der Zahnkupplung ZK2 fließen.

Obwohl die Erfindung im Detail durch die bevorzugten Ausführungsbeispiele näher illustriert und beschrieben wurde, so ist die Erfindung nicht durch die offenbarten Beispiele eingeschränkt.

## Patentansprüche

1. Planetengetriebe für eine Windkraftanlage, umfassend
- eine in einem Getriebegehäuse (4) umlaufende antriebsseitige Planetenstufe (2),
- eine der Planetenstufe (2) nachgeschaltete, abtriebsseitige Stirnradstufe (3),
- eine mit einem Sonnenrad (21) der Planetenstufe (2) drehfest verbundene Sonnenwelle (327) und
- eine Hohlwelle (400), die von einem Stirnrad (32) der Stirnradstufe (3) koaxial umgeben und mit diesem drehfest verbunden ist,
wobei
- die Sonnenwelle (327) und die Hohlwelle (400) durch eine Zahnkupplung (ZK2), bei der eine Außenverzahnung der Sonnenwelle (327) mit einer Innenverzahnung der Hohlwelle (400) in Eingriff steht, drehfest miteinander verbunden sind und im Bereich einer Axialkontaktfläche (50) aneinander anliegen, und
- das Getriebe Ölführungskanäle (43, 46, 48) aufweist, welche zur Druckschmierung der Zahnkupplung (ZK2) und der Axialkontaktfläche (50) eine Verbindung zwischen einem mit dem Getriebegehäuse (4) verbundenen Ölzulauf (41) einerseits und der Zahnkupplung (ZK2) und der Axialkontaktfläche (50) andererseits herstellen.

2. Planetengetriebe nach Anspruch 1, umfassend:
- einen ersten axialen Ölführungskanal (46), der durch einen sich zwischen der Hohlwelle (400) und der Sonnenwelle (327) erstreckenden ringförmigen Hohlraum gebildet wird, und/oder einen zweiten axialen Ölführungskanal (48), der axial durch die Hohlwelle (400) hindurchgeführt ist, und
- einen radialen Ölführungskanal (43), der radial durch einen an der Hohlwelle (400) angeformten Ring (44) verläuft und an dem einen Ende mit dem Ölzulauf (41) und an dem anderen Ende mit dem ersten (46) und/oder dem zweiten (48) axialen Ölführungskanal in Verbindung steht.

3. Planetengetriebe nach Anspruch 1 oder 2, umfassend eine Drehübertragungsvorrichtung (42, 43, 44), welche zur Übertragung von Öl von dem Ölzulauf (41) zu den Ölführungskanälen (43, 46, 48) geeignet ist.

4. Planetengetriebe nach Anspruch 3, wobei die Drehübertragungsvorrichtung (42, 43, 44) eine in einen an der Hohlwelle (400) angeformten Ring (44) eingeschnittene Ringnut (42) umfasst, in welche der Ölzulauf (41) mündet und welche mit den Ölführungskanälen (43, 46, 48) in Verbindung steht.

5. Planetengetriebe nach einem der vorhergehenden Ansprüche, wobei die Zahnkupplung (ZK2) in einem axialen Abschnitt des Getriebes angeordnet ist, in dem die Hohlwelle (400) die Sonnenwelle (327) umgibt.

6. Planetengetriebe nach Anspruch 2, wobei das antriebsseitige Ende des ersten axialen Ölführungskanals (46) durch eine zwischen der Sonnenwelle (327) und der Hohlwelle (400) angeordnete ringförmige Abdichtung (40) abgedichtet ist.

7. Planetengetriebe nach Anspruch 2, wobei das antriebsseitige Ende des zweiten axialen Ölführungskanals (48) abgedichtet ist.

8. Planetengetriebe nach Anspruch 7, wobei das antriebsseitige Ende des zweiten axialen Ölführungskanals (48) als eine durchgehende Bohrung ausgebildet ist, deren antriebsseitige Mündung nachträglich mittels eines Verschlussstopfens (49) verschlossen ist.

9. Planetengetriebe nach einem der vorhergehenden Ansprüche, wobei der Ölzulauf (41) mit einer Ölförderpumpe in Verbindung steht.

10. Verfahren zum Druckschmieren einer Zahnkupplung und einer Axialkontaktfläche eines Planetengetriebes für eine Windkraftanlage, wobei das Planetengetriebe eine in einem Getriebegehäuse (4) umlaufende antriebsseitige Planetenstufe (2), eine der Planetenstufe (2) nachgeschaltete, abtriebsseitige Stirnradstufe (3), eine mit einem Sonnenrad (21) der Planetenstufe (2) drehfest verbundene Sonnenwelle (327) und eine Hohlwelle (400), die von einem Stirnrad (32) der Stirnradstufe (3) koaxial umgeben und mit diesem drehfest verbunden ist, umfasst, wobei die Sonnenwelle (327) und die Hohlwelle (400) durch die Zahnkupplung (ZK2), bei der eine Außenverzahnung der Sonnenwelle (327) mit einer Innenverzahnung der Hohlwelle (400) in Eingriff steht, drehfest miteinander verbunden sind und im Bereich der Axialkontaktfläche (50) aneinander anliegen, wobei Öl mit Druck durch Ölführungskanäle (43, 46, 48), welche eine Verbindung zwischen einem mit dem Getriebegehäuse (4) verbundenen Ölzulauf (41) einerseits und der Zahnkupplung (ZK2) und der Axialkontaktfläche (50) andererseits herstellen, zu der Zahnkupplung (ZK2) und der Axialkontaktfläche (50) geleitet wird.

11. Verfahren nach Anspruch 10, wobei das durch die Ölführungskanäle (43, 46, 48) geleitete Öl vor und/oder nach Erreichen der Axialkontaktfläche (50) der Zahnkupplung (ZK2) zugeführt wird.

12. Verfahren nach Anspruch 10 oder 11, wobei das Öl mit einem Druck von mindestens ca. 1 bis 1,5 bar über Atmosphärendruck zu der Zahnkupplung (ZK2) und der Axialkontaktfläche (50) transportiert wird.

## Claims

1. Planetary gear train for a wind power plant, comprising
- a drive side planetary stage (2) rotating in a gear train housing (4),
- an output side spur gear stage (3) downstream of the planetary stage (2),
- a sun wheel shaft (327) non-rotatably connected to a sun wheel (21) of the planetary stage (2) and
- a hollow shaft (400) which is coaxially surrounded by a spur gear (32) of the spur gear stage (3) and is non-rotatably connected to said spur gear (32),
wherein
- the sun wheel shaft (327) and the hollow shaft (400) are non-rotatably connected to one another by a toothed coupling (ZK2), in which an outer toothing of the sun wheel shaft (327) meshes with an inner toothing of the hollow shaft (400), and abut one another in the region of an axial contact surface (50), and
- the gear train has oil feed ducts (43, 46, 48), which, for pressure lubrication of the toothed coupling (ZK2) and the axial contact surface (50), establish a connection between an oil inlet (41) connected to the gear train housing (4) on the one hand and the toothed coupling (ZK2) and the axial contact surface (50) on the other hand.

2. Planetary gear train according to claim 1, comprising:
- a first axial oil feed duct (46), which is formed by an annular cavity extending between the hollow shaft (400) and the sun wheel shaft (327), and/or a second axial oil feed duct (48) which is passed axially through the hollow shaft (400), and
- a radial oil feed duct (43), which runs radially through a ring (44) moulded to the hollow shaft (400) and at the one end is connected to the oil inlet (41) and at the other end is connected to the first (46) and/or the second (48) axial oil feed duct.

3. Planetary gear train according to claim 1 or 2, comprising a rotary transmission apparatus (42, 43, 44), which is suited to transmitting oil from the oil inlet (41) to the oil feed ducts (43, 46, 48).

4. Planetary gear train according to claim 3, wherein the rotary transmission apparatus (42, 43, 44) comprises an annular groove (42) cut into a ring (44) moulded on the hollow shaft (400), into which annular groove the oil inlet (41) opens and which is connected to the oil feed ducts (43, 46, 48).

5. Planetary gear train according to one of the preceding claims, wherein the toothed coupling (ZK2) is arranged in an axial section of the gear train, in which the hollow shaft (400) surrounds the sun wheel shaft (327).

6. Planetary gear train according to claim 2, wherein the drive side end of the first axial oil feed duct (46) is sealed by an annular seal (40) arranged between the sun wheel shaft (327) and the hollow shaft (400).

7. Planetary gear train according to claim 2, wherein the drive side end of the second axial oil feed duct (48) is sealed.

8. Planetary gear train according to claim 7, wherein the drive side end of the second axial oil feed duct (48) is embodied as a continuous bore, the drive side opening of which is subsequently closed by means of a closing plug (49).

9. Planetary gear train according to one of the preceding claims, wherein the oil inlet (41) is connected to an oil delivery pump.

10. Method for lubricating a toothed coupling and an axial contact surface of a planetary gear train for a wind power plant, wherein the planetary gear train comprises a drive side planetary stage (2) rotating in a gear train housing (4), an output side spur gear stage (3) downstream of the planetary stage (2), a sun wheel shaft (327) non-rotatably connected to a sun wheel (21) of the planetary stage (2) and a hollow shaft (400), which is coaxially surrounded by a spur gear (32) of the spur gear stage (3) and is non-rotatably connected hereto, wherein the sun wheel shaft (327) and the hollow shaft (400) are non-rotatably connected to one another by the toothed coupling (ZK2), in which an outer toothing of the sun wheel shaft (327) meshes with an inner toothing of the hollow shaft (400), and abut one another in the region of the axial contact surface (50), wherein oil is routed with pressure through oil feed ducts (43, 46, 48), which establish a connection between an oil inlet (41) connected to the gear train housing (4) on the one hand and the toothed coupling (ZK2) and the axial contact surface (50) on the other hand, to the toothed coupling (ZK2) and the axial contact surface (50).

11. Method according to claim 10, wherein the oil routed through the oil feed ducts (43, 46, 48) is fed to the toothed coupling (ZK2) prior to and/or after reaching the axial contact surface (50).

12. Method according to claim 10 or 11, wherein the oil is transported to the toothed coupling (ZK2) and the axial contact surface (50) with a pressure of at least approx. 1 to 1.5 bar above atmospheric pressure.

## Revendications

1. Train épicycloïdal pour une éolienne, comprenant :
- un étage (2) satellite du côté de l'entrée tournant dans un carter (4) du train,
- un étage (3) à roue droite du côté de la sortie monté après l'étage (2) satellite,
- un arbre (327) solaire solidaire en rotation d'une roue (21) solaire de l'étage (2) satellite et
- un arbre (400) creux, qui est entouré coaxialement d'une roue (32) droite de l'étage (3) à roue droite et qui est solidaire en rotation de celle-ci,
dans lequel
- l'arbre (327) solaire et l'arbre (400) creux sont solidarisés entre eux en rotation par un embrayage (ZK2) à denture, dans lequel une denture extérieure de l'arbre (327) solaire engrène avec une denture intérieure de l'arbre (400) creux, et s'appliquent l'un à l'autre dans la région d'une surface (50) de contact axiale et
- le train a des canaux (43, 46, 48) de conduite d'huile, qui, pour la lubrification sous pression de l'embrayage (ZK2) à denture et de la surface (50) de contact axiale, ménagent une liaison entre, d'une part, une arrivée (41) d'huile reliée au carter (4) du train et l'embrayage (ZK2) à denture et la surface (50) de contact axiale, d'autre part.

2. Train épicycloïdal suivant la revendication 1, comprenant :
- un premier canal (46) axial de conduite d'huile, qui est formé par une cavité annulaire s'étendant entre l'arbre (400) creux et l'arbre (327) solaire, et/ou un deuxième canal (48) axial de conduite d'huile, qui passe axialement dans l'arbre (400) creux et
- un canal (43) radial de conduite d'huile, qui s'étend radialement dans un anneau (44) formé sur l'arbre (400) creux et qui est en communication, à l'une des extrémités, avec l'arrivée (41) d'huile et, à l'autre extrémité, avec le premier (46) et/ou le deuxième (48) canal axial de conduite d'huile.

3. Train épicycloïdal suivant la revendication 1 ou 2, comprenant un dispositif (42, 43, 44) de transfert à rotation propre à transférer de l'huile de l'arrivée (41) d'huile aux canaux (43, 46 ,48) de conduite d'huile.

4. Train épicycloïdal suivant la revendication 3, dans lequel le dispositif (42, 43, 44) de transfert à rotation comprend une rainure (42) annulaire taillée dans un anneau (44) formé sur l'arbre (400) creux, rainure dans laquelle l'arrivée (41) d'huile débouche et qui est en communication avec les canaux (43, 46, 48) de conduite d'huile.

5. Train épicycloïdal suivant l'une des revendications précédentes, dans lequel l'embrayage (ZK2) à denture est disposé dans une partie axiale du train, dans laquelle l'arbre (400) creux entoure l'arbre (327) solaire.

6. Train épicycloïdal suivant la revendication 2, dans lequel l'extrémité du côté entrée du premier canal (46) axial de conduite d'huile est rendue étanche par une étanchéité (40) annulaire disposée entre l'arbre (327) solaire et l'arbre (400) creux.

7. Train épicycloïdal suivant la revendication 2, **caractérisé en ce que** l'extrémité du côté entrée du deuxième canal (48) axial de conduite d'huile est rendue étanche.

8. Train épicycloïdal suivant la revendication 7, dans lequel l'extrémité du côté entrée du deuxième canal (48) axial de conduite d'huile est constituée sous la forme d'un trou traversant, dont l'embouchure du côté entrée est fermée ultérieurement au moyen d'un bouchon (49) de fermeture.

9. Train épicycloïdal suivant l'une des revendications précédentes, dans lequel l'arrivée (41) d'huile est en communication avec une pompe pour véhiculer de l'huile.

10. Procédé de lubrification sous pression d'un embrayage à denture et d'une surface de contact axiale d'un train épicycloïdal pour une éolienne, dans lequel le train épicycloïdal comprend un étage (2) satellite du côté de l'entrée tournant dans un carter (4) du train, un étage (3) à roue droite du côté de la sortie monté après l'étage (2) satellite, un arbre (327) solaire solidaire en rotation d'une roue (21) solaire de l'étage (2) satellite et un arbre (400) creux, qui est entouré coaxialement d'une roue (32) droite de l'étage (3) à roue droite et qui est solidaire en rotation de celle-ci,
dans lequel l'arbre (327) solaire et l'arbre (400) creux sont solidarisés entre eux en rotation par un embrayage (ZK2) à denture, dans lequel une denture extérieure de l'arbre (327) solaire engrène avec une denture intérieure de l'arbre (400) creux, et s'appliquent l'un à l'autre dans la région d'une surface (50) de contact axiale et
dans lequel on envoie à l'embrayage (ZK2) à denture et à la surface (50) de contact axiale de l'huile sous pression par des canaux (43, 46, 48) de conduite d'huile, qui ménagent une liaison entre une arrivée (41) d'huile reliée au carter (4) du train, d'une part, et l'embrayage (ZK2) à denture et la surface (50) de contact axiale, d'autre part.

11. Procédé suivant la revendication 10, **caractérisé en ce que** l'on envoie à l'embrayage (ZK2) à denture l'huile conduite par les canaux (43, 46, 48) de conduite d'huile avant et après avoir atteint la surface (50) de contact axiale.

12. Procédé suivant la revendication 10 ou 11, dans lequel on transporte vers l'embrayage (ZK2) à denture et la surface (50) de contact axiale l'huile à une pression d'au moins environ 1 à 1,5 bar au-dessus de la pression atmosphérique.
